# EUROPÄISCHE PATENTSCHRIFT

(11) **EP 3 300 807 B1**
(45) Veröffentlichungstag und Bekanntmachung des Hinweises auf die Patenterteilung: **17.03.2021**
(21) Anmeldenummer: 17192267.7
(22) Anmeldetag: 21.09.2017
(51) Int. Cl.: B05B 1/18, B05B 1/00, B05B 1/30, E03C 1/04, F15D 1/02, F16L 55/027, E03C 1/08

(54) **STRÖMUNGSDROSSEL UND SANITÄRBRAUSE**
FLOW RESTRICTOR AND SANITARY SHOWER
DISPOSITIF D'ÉTRANGLEMENT DE L'ÉCOULEMENT ET DOUCHE SANITAIRE

(30) Priorität: 29.09.2016 DE 102016218917
(43) Veröffentlichungstag der Anmeldung: 04.04.2018
(73) Patentinhaber: Hansgrohe SE, 77761 Schiltach (DE)
(72) Erfinder: KLASSEN, Arthur, 78737 Fluorn-Winzeln (DE)
(74) Vertreter: Patentanwälte Ruff, Wilhelm, Beier, Dauster & Partner mbB

(56) Entgegenhaltungen:
- EP-A1- 2 359 726
- DE-A1- 10 027 987
- DE-A1- 10 149 335
- DE-A1- 10 246 333
- DE-U1- 29 718 728
- FR-A1- 2 310 514
- US-A- 4 007 908

## Beschreibung

Die Erfindung bezieht sich auf eine Strömungsdrossel nach dem Oberbegriff des Patentanspruchs 1 und auf eine mit einer solchen Strömungsdrossel ausgerüstete Sanitärbrause, die einen Brauseeinlassbereich mit einem Brauseeinlass, einen Brauseauslassbereich mit einem Brauseauslass und eine Wasserführung vom Brauseeinlass zum Brauseauslass aufweist.

Es ist beispielsweise bei wasserführenden Sanitäreinrichtungen, wie Brausen und diesen vorgelagerten Armaturen sowie Badewannen- und Waschtischarmaturen, bekannt, strömungsregulierende bzw. durchflussbegrenzende Maßnahmen zu treffen. Außerdem wird angestrebt, die Geräuschentwicklung zu minimieren, die von der Wasserströmung verursacht wird, wenn im Betrieb Wasser durch diese Einrichtungen hindurchströmt. So sind u.a. Mengenregler, die im Zuflussbereich von Brausen und anderen Sanitärarmaturen zwecks Regulierung der durchströmenden Wassermenge eingesetzt werden, und Leitungskrümmungen, typische Quellen für unerwünscht starke Strömungsgeräusche. Auftretende Strömungsgeräusche können zudem durch Körperschall störend verstärkt werden.

Strömungsdrosseln der eingangs genannten, gattungsgemäßen Art sind beispielsweise in der Patentschrift US 4,007,908, der Offenlegungsschrift FR 2 310 514 und der Gebrauchsmusterschrift DE 297 18 728 U1 offenbart, insbesondere zur Bildung von Strahlreglerkörpern, wobei die dortigen Stege sämtlich oder mindestens überwiegend als im Querschnitt kreisrunde Stabelemente gebildet sind. Strahlregler mit anderen strahlzerlegenden Strukturen ohne Stegebenen mit in einer Ebene zueinander parallelen und in aufeinanderfolgenden Ebenen nicht parallel verlaufenden Stegen sind in den Offenlegungsschriften DE 100 27 987 A1, DE 101 49 335 A1 und DE 102 46 333 A1 offenbart.

Die Offenlegungsschrift EP 2 359 726 A1 offenbart eine Sanitärbrause mit einem einteiligen Brausekörper, der in Strömungsrichtung nacheinander einen Zufuhrabschnitt, einen Drosselabschnitt, einen Belüftungsabschnitt und einen Strahlaustrittsabschnitt aufweist. Der Drosselabschnitt ist von einer perforierten Zwischenwand gebildet, die von zum Beispiel in einer Reihe nebeneinander angeordneten Drosselbohrungen durchsetzt ist.

Der Erfindung liegt als technisches Problem die Bereitstellung einer Strömungsdrossel, die sich geräuschmindernd und bei Bedarf auch durchflussmindernd einsetzen lässt, sowie einer damit ausgerüsteten Sanitärbrause zugrunde.

Die Erfindung löst dieses Problem durch die Bereitstellung einer Strömungsdrossel mit den Merkmalen des Anspruchs 1 und einer Sanitärbrause mit den Merkmalen des Anspruchs 10.

Die erfindungsgemäße Strömungsdrossel beinhaltet einen Drosselkörper, der aus mehreren Stegebenen gebildet ist, die in einer Axialrichtung des Drosselkörpers aufeinanderfolgen. Die Stegebenen füllen jeweils einen Durchlassquerschnitt des Drosselkörpers senkrecht zur Axialrichtung aus, d.h. jede Stegebene erstreckt sich über den gesamten Durchlassquerschnitt des Drosselkörpers hinweg. Jede Stegebene besteht aus einer Mehrzahl von zueinander parallel und senkrecht zur Axialrichtung verlaufenden Stegen. Die Stege einer jeweiligen Stegebene sind voneinander beabstandet und belassen dadurch zwischenliegende Stegzwischenräume. Die Stege je zweier direkt aufeinanderfolgender Stegebenen verlaufen nichtparallel zueinander, d.h. sie verlaufen unter einem gewissen Winkel gekreuzt zueinander. Dabei gehen die Stege zweier direkt aufeinanderfolgender Stegebenen einteilig hergestellt ineinander über.

Es hat sich gezeigt, dass die erfindungsgemäße Strömungsdrossel mit dieser spezifischen Drosselkörperstruktur eine sehr wirksame Schalldrosselung und damit Geräuschreduzierung bewirken kann. Die in mehreren Ebenen in Strömungsrichtung hintereinanderliegenden, nichtparallelen Stegreihen, die eine mehrfache Fluidumlenkung erzwingen, wirken zu hohen Fließgeschwindigkeiten eines durchströmenden Fluids entgegen. Andererseits resultiert die Struktur des Drosselkörpers in einem Strömungsverhalten, das in hohem Maß schalldrosselnd bzw. geräuschmindernd wirkt.

In Weiterbildung der Erfindung verlaufen die Stege je zweier direkt aufeinanderfolgender Stegebenen unter einem Winkel von mindestens 45° zueinander, vorzugsweise unter einem Winkel von mindestens 85°, wobei insbesondere ein zueinander senkrechter Verlauf vorgesehen sein kann. In der Regel erhöht sich mit höherem Kreuzungswinkel der Stege je zweier direkt aufeinanderfolgender Stegebenen die geräuschmindernde Wirkung.

In Weiterbildung der Erfindung sind die Stege jeweils übernächster Stegebenen zueinander parallel und querversetzt. Unter querversetzt ist dabei zu verstehen, dass die Stegreihe der einen Stegebene gegenüber derjenigen der anderen, übernächsten Stegebene senkrecht zur Axialrichtung des Drosselkörpers und senkrecht zur Stegverlaufsrichtung versetzt ist. Dadurch überlappen die Stege der einen Ebene mindestens teilweise mit den Stegzwischenräumen der anderen, übernächsten Stegebene. Dies optimiert die Drosselungswirkung der Strömungsdrossel hinsichtlich Geräuschminderung und/oder Fluiddurchflussmenge. Insbesondere kann vorgesehen sein, dass die Stege der einen Ebene, in Projektion der Axialrichtung gesehen, vollständig innerhalb der Stegzwischenräume der anderen, übernächsten Stegebene liegen oder diese Stegzwischenräume vollständig überdecken, je nach Breite der Stege einerseits und der Stegzwischenräume andererseits.

In Weiterbildung der Erfindung haben alle Stege aller Stegebenen eine im Wesentlichen einheitliche, gleiche Breite, und die Breite der Stegzwischenräume, die vorzugsweise ebenfalls für alle Zwischenräume im Wesentlichen gleich ist, weicht um höchstens 10% von der Breite der Stege ab. Das bedeutet, dass der Abstand benachbarter Stege in der jeweiligen Stegebene im Wesentlichen der Breite der Stege entspricht. In einer vorteilhaften Realisierung können die Stege jeweils übernächster Stegebenen parallel und zueinander um die Stegbreite querversetzt sein, so dass dann die Stege der einen Ebene, in Projektion der Axialrichtung des Drosselkörpers gesehen, im Wesentlichen vollständig die Stegzwischenräume der anderen, übernächsten Stegebene überdecken. Ein dergestalt aufgebauter Drosselkörper ist fertigungstechnisch und hinsichtlich geräusch-/durchflussdrosselnder Wirkung vorteilhaft.

In Weiterbildung der Erfindung ist der Drosselkörper aus mehreren einteiligen, in Axialrichtung gestapelten Drosselelementen aufgebaut, die jeweils mindestens zwei der Stegebenen beinhalten. Auch dies stellt eine unter Fertigungsgesichtspunkten vorteilhafte Maßnahme dar. Dabei können die einzelnen Drosselelemente alle gleich viele Stegebenen aufweisen oder sich alternativ in ihrer Anzahl von Stegebenen unterscheiden. Dies ermöglicht eine vergleichsweise einfache Herstellung der Strömungsdrossel.

In Ausgestaltung der Erfindung weisen die gestapelten Drosselelemente Verbindungsmittel auf, durch die sie miteinander lösbar oder unlösbar verbunden sind. Dies ermöglicht eine Fertigung des Drosselkörpers dadurch, dass zunächst die einteiligen Drosselelemente hergestellt und diese dann zu dem Drosselkörper zusammengebaut werden.

In weiterer Ausgestaltung der Erfindung sind die Verbindungsmittel lösbare Rastverbindungsmittel. Dies kann fertigungstechnisch und funktionell von Vorteil sein und ermöglicht bei Bedarf eine zerstörungsfreie Demontage des Drosselkörpers in die einzelnen einteiligen Drosselelemente.

In Weiterbildung der Erfindung ist eine Breite des jeweiligen Steges senkrecht zur Axialrichtung kleiner als eine Höhe des Steges parallel zur Axialrichtung. Dies stellt eine vorteilhafte Dimensionierung der Stege dar.

In Ausgestaltung der Erfindung ist die Höhe des Steges um das Zweifache bis Fünffache größer als die Breite des Steges. Dies stellt eine weitergehend vorteilhafte Dimensionierungsmaßnahme für die Stege dar.

Bei der erfindungsgemäßen Sanitärbrause ist die erfindungsgemäße Strömungsdrossel in einem Brauseanschlusskörper der Sanitärbrause angeordnet, wobei der Brauseanschlusskörper einen Brauseeinlassbereich mit einem Brauseeinlass beinhaltet und wobei dem Brauseanschlusskörper in Strömungsrichtung ein mit dem Brauseanschlusskörper verbundener Brausehauptkörper folgt, der einen Brauseauslassbereich mit einem Brauseauslass beinhaltet, über den ein zugehöriger Brausestrahl abgegeben wird. Dabei ist die Strömungsdrossel in einer Wasserführung vom Brauseeinlass zum Brauseauslass angeordnet. Beispielsweise kann es sich bei dem Brausehauptkörper um einen Brausekopf einer flachbauenden Kopfbrause handeln, der schwenkbeweglich z.B. über ein Kugelgelenk an den Brauseanschlusskörper angekoppelt ist. Dadurch lässt sich die Geräuschentwicklung der Sanitärbrause drosseln bzw. mindern, und bei Bedarf kann die Strömungsdrossel zudem eine Durchflussregulierung bzw. Durchflussdrosselung für die von der Sanitärbrause verbrauchte Wassermenge bereitstellen.

Vorteilhafte Ausführungsformen der Erfindung sind in den Zeichnungen dargestellt und werden nachfolgend beschrieben. Hierbei zeigen:
- Fig.1: eine Längsschnittansicht eines Teils einer Sanitärbrause,
- Fig. 2: eine Perspektivansicht einer in der Sanitärbrause von Fig. 1 eingebauten Strömungsdrossel,
- Fig. 3: eine Draufsicht auf die Strömungsdrossel von Fig. 2,
- Fig. 4: eine Schnittansicht längs einer Linie IV-IV in Fig. 3,
- Fig. 5: eine Perspektivansicht einer weiteren Strömungsdrossel,
- Fig. 6: eine Draufsicht auf die Strömungsdrossel von Fig. 5,
- Fig. 7: eine Schnittansicht längs einer Linie VII-VII in Fig. 6,
- Fig. 8: eine perspektivische Explosionsansicht einer weiteren Strömungsdrossel,
- Fig. 9: eine Perspektivansicht der Strömungsdrossel von Fig. 8 in zusammengebautem Zustand und
- Fig. 10: eine Längsschnittansicht der Strömungsdrossel der Fig. 8 und 9.

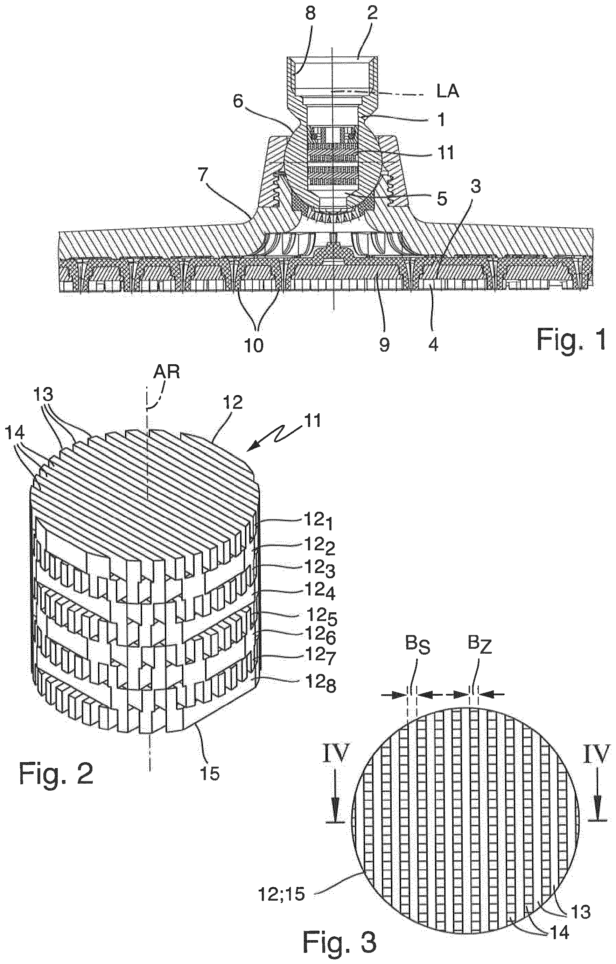

Die Sanitärbrause von Fig. 1 umfasst einen Brauseeinlassbereich 1 mit einem Brauseeinlass 2 sowie einen Brauseauslassbereich 3 mit einem Brauseauslass 4. Eine Wasserführung 5 führt vom Brauseeinlass 2 zum Brauseauslass 4. Sie kann z.B. als flachbauende Kopfbrause eines Duschsystems eingesetzt werden.

Im gezeigten Ausführungsbeispiel ist der Brauseeinlassbereich 1 von einem Brauseanschlusskörper 6 gebildet, mit dem ein Brausehauptkörper 7 verbunden ist, der den Brauseauslassbereich 3 umfasst. Die Verbindung ist im gezeigten Beispiel durch ein Kugelgelenk 8 realisiert, so dass der Brausehauptkörper 7 entsprechend allseits schwenkbeweglich am Brauseanschlusskörper 6 gehalten ist, der seinerseits über ein Anschlussgewinde 8 an einen üblichen, nicht gezeigten Wasserversorgungsanschluss angekoppelt werden kann. Der Brauseauslassbereich 3 kann z.B. durch eine übliche einteilige oder wie gezeigt mehrteilige Strahlscheibe 9 mit einer Mehrzahl von Strahlaustrittsöffnungen 10 gebildet sein, die den Brauseauslass 4 bilden, um einen entsprechenden Brausestrahl bereitzustellen.

In der Wasserführung 5 und im gezeigten Ausführungsbeispiel speziell im Brauseanschlusskörper 6 ist eine Strömungsdrossel 11 angeordnet, wie sie einzeln in den Fig. 2 bis 4 dargestellt ist. Wie daraus ersichtlich, beinhaltet die Strömungsdrossel 11 einen Drosselkörper 12, der aus mehreren Stegebenen 12₁ bis 12₈ gebildet ist, im gezeigten Beispiel acht Stegebenen. Die Stegebenen 12₁ bis 12₈ sind in einer Axialrichtung AR aufeinanderfolgend angeordnet, d.h. sie liegen in dieser Richtung AR stapelförmig hintereinander bzw. übereinander. Im eingebauten Zustand in der Sanitärbrause von Fig. 1 entspricht die Drosselkörper-Axialrichtung AR der Richtung einer Brauselängsachse LA. Die Drosselkörper-Axialrichtung AR entspricht der Richtung, in welcher die Strömungsdrossel 11 bzw. der Drosselkörper 12 im Betrieb von Fluid, wie Wasser, durchströmt wird. Im gezeigten Beispiel hat der Drosselkörper 12 eine rundzylindrische Form, in alternativen Ausführungen besitzt er irgendeine andere, z.B. ovale oder mehreckige Querschnittsform. Jede Stegebene 12₁ bis 12₈ füllt diesen im gezeigten Beispiel kreisrunden Durchlassquerschnitt des Drosselkörpers 12 senkrecht zur Axialrichtung AR aus, d.h. sie erstreckt sich jeweils über den gesamten Durchlassquerschnitt.

Jede Stegebene 12₁ bis 12₈ besteht aus einer Mehrzahl von zueinander parallel und senkrecht zur Axialrichtung verlaufenden Stegen 13, die unter Belassung von Stegzwischenräumen 14 voneinander beabstandet sind, wobei die Stege 13 je zweier direkt aufeinanderfolgender Stegebenen, wie 12₁ und 12₂, 12₂ und 12₃ usw., nichtparallel zueinander verlaufen. Bevorzugt verlaufen die Stege zweier direkt aufeinanderfolgender Stegebenen unter einem Winkel von mindestens 45°, insbesondere mindestens 85°. Im gezeigten Beispiel verlaufen sie senkrecht zueinander. Die Stege 13 jeder Stegebene 12₁ bis 12₈ haben eine vorzugsweise gleiche axiale Höhe, d.h. Steghöhe, die wiederum die axiale Höhe der jeweiligen Stegebene 12₁ bis 12₈ definiert. Dabei gehen die Stege 13 der jeweils direkt aufeinanderfolgenden, d.h. aneinandergrenzenden, Stegebenen, wie 12₁ und 12₂ usw., einteilig ineinander über.

Im gezeigten Beispiel haben alle Stege 13 aller Stegebenen 12₁ bis 12₈ eine gleiche Breite B_{S}, und ebenso haben alle Stegzwischenräume 14 eine gleiche Breite B_{Z}. In alternativen Ausführungsformen haben die Stege mindestens einer Stegebene unterschiedliche Breiten, und/oder die Stege verschiedener Stegebenen haben unterschiedliche Breiten, und/oder die Stegzwischenräume mindestens einer Stegebene haben unterschiedliche Breiten, und/oder die Stegzwischenräume verschiedener Stegebenen haben unterschiedliche Breiten. Bevorzugt weicht die Breite B_{Z} der Stegzwischenräume 14 um höchstens 10% von der Breite B_{S} der Stege 13 ab, insbesondere können die Breiten gleich sein, d.h. B_{Z}=B_{S}. In alternativen Ausführungsformen weicht die Breite der Stegzwischenräume um mehr als 10% von der Breite der Stege ab. Die Stegbreite B_{S} ist vorzugsweise kleiner als die Steghöhe, in entsprechenden Ausführungen hat die Steghöhe einen beliebig aus dem Bereich des Zweifachen bis Fünffachen der Stegbreite B_{S} gewählten Wert.

In entsprechenden Ausführungsformen verlaufen die Stege 13 jeweils übernächster Stegebenen, wie 12₁ und 12₃, 12₂ und 12₄, 12₃ und 12₅, 12₄ und 12₆ usw., parallel und querversetzt. Im gezeigten Beispiel verlaufen sie parallel und um die Stegbreite B_{S} querversetzt. Dies bedeutet, dass in Projektion der Axialrichtung AR gesehen die Stege 13 der einen Stegebene, z.B. 12₁ oder 12₂, genau in bzw. über den Stegzwischenräumen 14 der übernächsten Stegebene, z.B. 12₃ bzw. 12₄, liegen, insbesondere bei im Wesentlichen gleichen Breiten B_{S}, B_{Z} der Stege 13 und der Stegzwischenräume 14. In diesem Fall gibt es dann spätestens nach vier Stegebenen keine in Axialrichtung AR freien Durchtrittsbereiche mehr, d.h. das Fluid wird an jedem Punkt des Durchlassquerschnitts des Drosselkörpers 12 durch die Drosselkörperstruktur ab-/umgelenkt. In alternativen Ausführungsformen verlaufen die Stege von mindestens zwei übernächsten Stegebenen nichtparallel und/oder ohne Querversatz.

Im gezeigten Ausführungsbeispiel ist der Drosselkörper 12 mit seinen acht aufeinanderfolgenden Stegebenen 12₁ bis 12₈ von einem einteiligen Drosselelement 15 gebildet. Das einteilige Drosselelement 15 kann z.B. durch ein additives Herstellungsverfahren, wie einer 3D-Drucktechnik, hergestellt werden. In alternativen Ausführungen ist der Drosselkörper 12 aus mehreren Einzelteilen zusammengesetzt, die jeweils getrennt gefertigt und anschließend zusammengefügt werden, z.B. durch Verkleben oder Verschweißen. Vorzugsweise besteht der Drosselkörper 12 aus einem Kunststoffmaterial, z.B. aus einem für ein 3D-Druckverfahren oder ein Spritzgießverfahren geeigneten Kunststoffmaterial.

Es zeigt sich, dass die Geräuschentwicklung bei der Sanitärbrause von Fig. 1 durch den Einbau der Strömungsdrossel 11 signifikant gemindert werden kann und dabei auch Körperschalleffekte für die beispielsweise als Kopfbrause einsetzbare Sanitärbrause von Fig. 1 reduziert. Die Strömungsdrossel wirkt drosselnd auf die Strömungsgeschwindigkeit des zugeführten Wassers und sorgt für eine deutliche Minderung des Wasserströmungsgeräusches, das ansonsten u.a. durch die relativ starke Umlenkung vom primär axialen Strömungsverlauf im Brauseeinlassbereich 1 in einen primär radialen anschließenden Strömungsverlauf im Brauseauslassbereich 3 vor Eintritt in die Strahlaustrittsöffnungen 10 entstehen könnte. Zudem kann durch den Einsatz der Strömungsdrossel 11 ein herkömmlicher Mengenregler im Brauseeinlassbereich 1 eingesetzt werden, wenn hierfür Bedarf besteht, ohne dass dies eine übermäßige Geräuschentwicklung zur Folge hat.

Zusätzlich zur schalldrosselnden Funktion kann die Strömungsdrossel 11, wie erwähnt, eine die Fließgeschwindigkeit des durchfließenden Wassers drosselnde Funktion erfüllen, indem das durchströmende Wasser, wie erläutert, einen oder mehrere Richtungswechsel an den in Strömungsrichtung hintereinanderliegenden Stegebenen macht. Durch entsprechende Wahl der Anzahl an aufeinanderfolgenden Stegebenen sowie der Stegbreiten und der Stegabstände innerhalb einer jeweiligen Stegebene lässt sich die Wirkung der Reduktion des Geräuschpegels und der Durchflussdrosselung in gewünschter Weise einstellen.

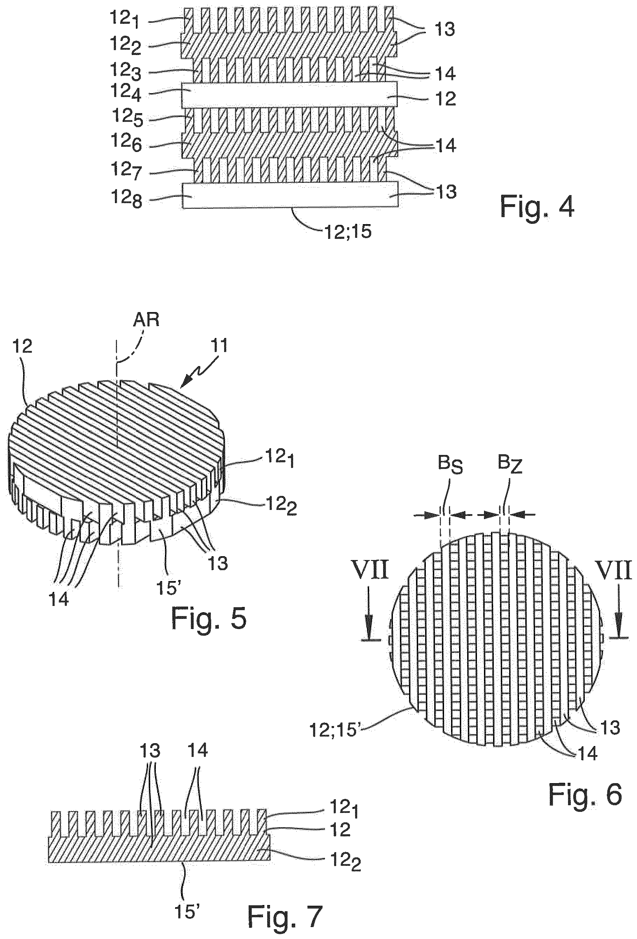

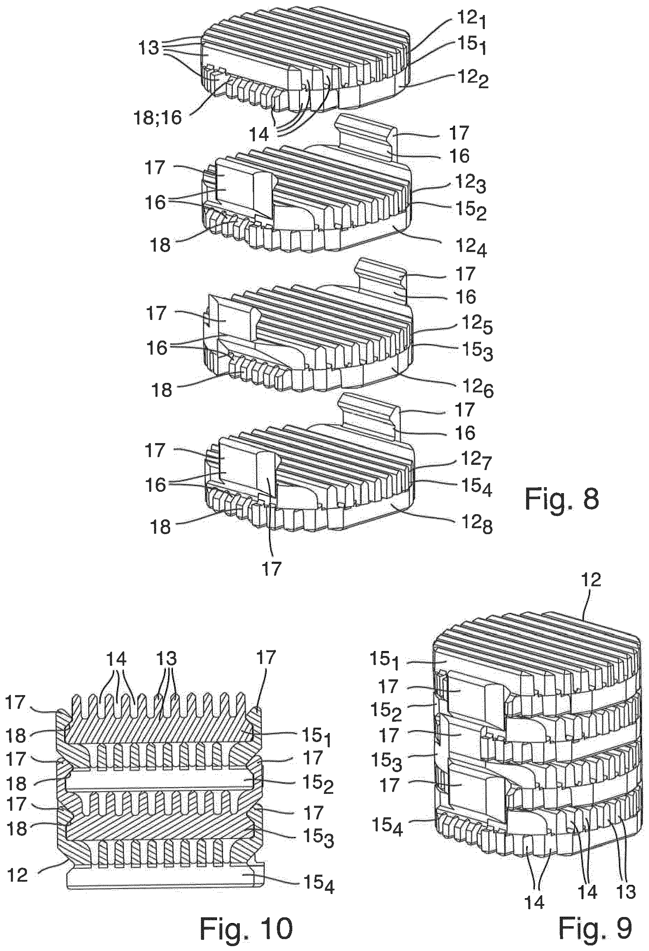

Die Fig. 5 bis 7 veranschaulichen eine Minimalvariante für die Strömungsdrossel 11, bei welcher der Drosselkörper 12 aus nur den zwei Stegebenen 12₁, 12₂ gebildet ist. Zum leichteren Verständnis sind für die Variante der Fig. 5 bis 7 ebenso wie für die weitere Variante der Fig. 8 bis 10 für identische und funktionell äquivalente Elemente gleiche Bezugszeichen wie bei der Ausführung gemäß den Fig. 2 bis 4 verwendet, und es kann hinsichtlich dieser Elemente und deren Eigenschaften und Wirkungen auf die obigen Erläuterungen zu den Fig. 2 bis 4 verwiesen werden.

Der Drosselkörper 12 ist bei der Ausführungsform der Fig. 5 bis 7 wiederum durch ein einteiliges Drosselelement 15' gebildet, das z.B. mittels eines additiven Verfahrens, wie 3D-Druck, hergestellt werden kann, wobei alternativ andere herkömmliche Fertigungsverfahren verwendbar sind. Die Stege 13 der beiden Stegebenen 12₁, 12₂ verlaufen wie gezeigt vorzugsweise senkrecht zueinander, und auch hier haben die Stege 13 und die Stegzwischenräume 14 vorzugsweise jeweils im Wesentlichen gleiche Breiten B_{S} bzw. B_{Z}. Hierzu und im Übrigen kann auf die obigen Erläuterungen zum Ausführungsbeispiel der Fig. 2 bis 4 verwiesen werden. Die Minimalvariante der Fig. 5 bis 7 ist insbesondere in Fällen verwendbar, in denen bereits eine relativ geringfügige Drosselungswirkung hinsichtlich Geräuschminderung und/oder Durchflussminderung ausreicht.

Die Fig. 8 bis 10 veranschaulichen eine Ausführungsvariante, bei welcher der Drosselkörper 12 aus mehreren einteiligen, in der Axialrichtung AR gestapelten Drosselelementen 15₁ bis 15₄ aufgebaut ist, die jeweils wie das Drosselelement 15' im Ausführungsbeispiel der Fig. 5 bis 7 zwei Stegebenen 12₁, 12₂ bzw. 12₃, 12₄ usw. beinhalten.

Die gestapelten Drosselelemente 15₁ bis 15₄ weisen Verbindungsmittel 16 auf, durch die sie miteinander verbunden werden können. Die Verbindungsmittel 16 sind in diesem Beispiel lösbare Rastverbindungsmittel, die an jedem Drosselelement 15₁ bis 15₄ an zwei gegenüberliegenden Seiten Rastausnehmungen 18 und, mit Ausnahme des ersten bzw. obersten Drosselelements 15₁, zwei korrespondierende, axial abstehende Rastnasen 17 beinhalten.

Mit Hilfe dieser Rastverbindung 16 können die einzelnen Drosselelemente 15₁ bis 15₄ aufeinandergestapelt und miteinander verrastet werden, um den fertigen Drosselkörper 12 zu bilden, wie in den Fig. 9 und 10 gezeigt. Dabei rasten die als Federzungen gebildeten Rastnasen 17 eines jeweiligen Drosselelements 15₂ bis 15₄ in die Rastausnehmungen 18 des im Stapel jeweils nächsten Drosselelements 15₁ bis 15₃ ein.

Jedes Drosselelement 15₁ bis 15₄ entspricht ansonsten in Aufbau und Funktion dem Drosselelement 15' in der Variante der Fig. 5 bis 7, insbesondere hinsichtlich Verlauf und Anordnung der Stege 13 und der Stegzwischenräume 14. Somit entspricht der aus den vier Drosselelementen 15₁ bis 15₄ aufgebaute Drosselkörper 12 in der Variante der Fig. 8 bis 10, wie er fertiggestellt in den Fig. 9 und 10 ersichtlich ist, in Struktur und Eigenschaften, insbesondere hinsichtlich der Stegebenen 12₁ bis 12₈ mit den Stegen 13 und den Stegzwischenräumen 14, dem Drosselkörper 12 in der Realisierung der Fig. 2 bis 4. Unterschiedlich ist lediglich die Herstellung des Drosselkörpers 12 der Fig. 8 bis 10 aus den vier einteiligen Drosselelementen 15₁ bis 15₄ statt des einteiligen Drosselelements 15 bei der Realisierung der Fig. 2 bis 4 und die Möglichkeit, den Drosselkörper 12 in der Ausführungsvariante der Fig. 8 bis 10 wieder in die einzelnen Drosselelemente 15₁ bis 15₄ auseinanderbauen zu können. Dazu brauchen lediglich die Rastnasen 17 aus den Rastausnehmungen 18 ausgerastet werden. Dies ermöglicht bei Bedarf einen Austausch des jeweiligen Drosselelements 15₁ bis 15₄ und erleichtert ggf. eine Reinigung des Drosselkörpers 12.

Ein weiterer Vorteil der Ausführungsvariante gemäß den Fig. 8 bis 10 liegt darin, den Drosselkörper 12 je nach Bedarf und Anwendungsfall mit einer frei wählbaren Anzahl an einzelnen Drosselelementen nach Art der Drosselelementen 15₁ bis 15₄ aufbauen zu können, so dass ein Drosselkörper mit einer beliebigen gewünschten Anzahl von aufeinanderfolgenden Stegebenen bereitgestellt werden kann. Im Übrigen gelten die zu den Ausführungsbeispielen der Fig. 1 bis 7 erwähnten Eigenschaften und Vorteile in analoger Weise für den Drosselkörper 12 und die zugehörige Strömungsdrossel in der Ausführung gemäß den Fig. 8 bis 10.

In nicht gezeigten, weiteren Ausführungsformen der Erfindung sind andere als die in Fig. 1 gezeigte Sanitärbrausen, bei denen es sich z.B. um andersartige Kopfbrausen oder um Hand- oder Seitenbrausen handeln kann, mit der erfindungsgemäßen Strömungsdrossel ausgerüstet, wobei diese vorzugsweise im Brauseeintrittsbereich der Sanitärbrause angeordnet ist, aber auch alternativ an anderer Stelle eingebaut sein kann. In weiteren alternativen Ausführungsformen der Erfindung ist die erfindungsgemäße Strömungsdrossel in einer der gezeigten oder in einer anderen Ausführungsvariante in eine andere Sanitäreinrichtung statt in einer Sanitärbrause eingesetzt, z.B. in Mischerarmaturen und anderen wasserführenden Armaturen und Rohrleitungsabschnitten von Badewannen- und Waschtischsystem oder Duschsystemen.

Wie die gezeigten und oben erläuterten Ausführungsbeispiele deutlich machen, stellt die Erfindung eine Strömungsdrossel zur Verfügung, die in besonders vorteilhafter Weise gefertigt und zur Geräuschminderung und/oder Durchflussdrosselung in fluidführenden Einrichtungen eingesetzt werden kann, unter anderem insbesondere in Sanitärbrausen.

## Patentansprüche

1. Strömungsdrossel, insbesondere sanitäre Strömungsdrossel, mit
- einem Drosselkörper (12), der aus mehreren, in einer Axialrichtung (AR) aufeinanderfolgenden und einen Durchlassquerschnitt des Drosselkörpers senkrecht zur Axialrichtung ausfüllenden Stegebenen (12₁, 12₂, ...) gebildet ist,
- wobei jede Stegebene aus einer Mehrzahl von zueinander parallel und senkrecht zur Axialrichtung verlaufenden Stegen (13) besteht, die unter Belassung von Stegzwischenräumen (14) voneinander beabstandet sind, und wobei die Stege je zweier direkt aufeinanderfolgender Stegebenen nichtparallel zueinander verlaufen,
**dadurch gekennzeichnet, dass**
- die Stege (13) mindestens einer ersten (12₁) und einer zweiten, direkt auf die erste folgenden Stegebene (12₂) einteilig hergestellt ineinander übergehen.

2. Strömungsdrossel nach Anspruch 1, wobei die Stege je zweier direkt aufeinanderfolgender Stegebenen unter einem Winkel von mindestens 45°, insbesondere mindestens 85°, zueinander verlaufen.

3. Strömungsdrossel nach Anspruch 1 oder 2, wobei die Stege jeweils übernächster Stegebenen parallel und querversetzt verlaufen.

4. Strömungsdrossel nach einem der Ansprüche 1 bis 3, wobei die Stege eine gleiche Breite (B_{S}) aufweisen und eine Breite (B_{Z}) der Stegzwischenräume um höchstens 10% von der Breite der Stege abweicht.

5. Strömungsdrossel nach einem der Ansprüche 1 bis 4, wobei der Drosselkörper aus mehreren einteiligen, in Axialrichtung gestapelten Drosselelementen (15₁, 15₂, ...) aufgebaut ist, die jeweils mindestens die erste Stegebene und die zweite Stegebene beinhalten.

6. Strömungsdrossel nach Anspruch 5, wobei die gestapelten Drosselelemente Verbindungsmittel (16) aufweisen, durch die sie miteinander lösbar oder unlösbar verbunden sind.

7. Strömungsdrossel nach Anspruch 6, wobei die Verbindungsmittel lösbare Rastverbindungsmittel (17, 18) sind.

8. Strömungsdrossel nach einem der Ansprüche 1 bis 7, wobei eine Breite (Bₛ) des jeweiligen Steges (13) senkrecht zur Axialrichtung (AR) kleiner als eine Höhe des Steges parallel zur Axialrichtung ist.

9. Strömungsdrossel nach Anspruch 8, wobei die Höhe des Steges um das Zweifache bis Fünffache größer als die Breite des Steges ist.

10. Sanitärbrause mit
- einem Brauseanschlusskörper (6), der einen Brauseeinlassbereich (1) mit einem Brauseeinlass (2)beinhaltet,
- einem Brausehauptkörper (7), der einen Brauseauslassbereich (3) mit einem Brauseauslass (4) beinhaltet und mit dem Brauseeinlasskörper verbunden ist,
- einer Wasserführung (5) vom Brauseeinlass zum Brauseauslass und
- einer im Brauseanschlusskörper in der Wasserführung angeordneten Strömungsdrossel (11) nach einem der Ansprüche 1 bis 9.

## Claims

1. Flow restriction device, preferably sanitary flow restriction device, comprising
- a restrictor body (12) composed of a plurality of web planes (12₁, 12₂, ...) disposed successively in an axial direction (AR) and filling a passage cross-section of the restrictor body perpendicular to the axial direction,
- wherein each web plane is composed of a plurality of webs (13) extending mutually in parallel and perpendicular to the axial direction, the webs being spaced from each other thereby leaving web intermediate gaps (14), and wherein the webs of two directly adjoining web planes extend non-parallel to each other,
**characterized in that**
- the webs (13) of at least a first web plane (12₁) and a second web plane (12₂) directly adjoining the first web plane are produced in one piece and converge.

2. Flow restriction device according to claim 1, wherein the webs of two directly adjoining web planes extend inclined to each other at an angle of at least 45°, preferably at least 85°.

3. Flow restriction device according to claim 1 or 2, wherein the webs of respective next but one web planes extend in parallel and transversely offset.

4. Flow restriction device according to any one of claims 1 to 3, wherein the webs have an identical width (B_{S}) and a width (B_{Z}) of the web intermediate gaps varies by at most 10 % from the width of the webs.

5. Flow restriction device according to any one of claims 1 to 4, wherein the restrictor body is composed of a plurality of one-piece restrictor elements (15₁, 15₂, ...) stacked in the axial direction, each including at least the first web plane and the second web plane.

6. Flow restriction device according to claim 5, wherein the stacked restrictor elements include connecting means (16), interconnecting said elements in a releasable or non-releasable manner.

7. Flow restriction device according to claim 6, wherein the connecting means are releasable snap-on connecting means (17, 18).

8. Flow restriction device according to any one of claims 1 to 7, wherein a width (B_{S}) of the respective web (13) perpendicular to the axial direction (AR) is less than a height of the web parallel to the axial direction.

9. Flow restriction device according to claim 8, wherein the height of the web is two-times to five-times greater than the width of the web.

10. Sanitary shower, comprising
- a shower connecting body (6) including a shower inlet region (1) with a shower inlet (2),
- a shower main body (7) including a shower outlet region (3) with a shower outlet (4) and being connected to the shower inlet body,
- a water passageway (5) from the shower inlet to the shower outlet, and
- a flow restriction device (11) according to any one of claims 1 to 9 disposed within the shower connecting body in the water passageway.

## Revendications

1. Dispositif d'étranglement de l'écoulement, en particulier dispositif sanitaire d'étranglement de l'écoulement, comprenant
- un corps d'étranglement (12) qui est formé de plusieurs plans de barrettes (12₁, 12₂, ...) qui se succèdent dans une direction axiale (AR) et qui remplissent une section transversale de passage du corps d'étranglement perpendiculairement à la direction axiale,
- chaque plan de barrettes étant constitué d'une pluralité de barrettes (13) qui s'étendent parallèlement les unes aux autres et perpendiculairement à la direction axiale et qui sont espacées les unes des autres en laissant des intervalles inter-barrettes (14), les barrettes de deux plans de barrettes respectifs directement successifs s'étendant de manière non parallèle entre elles,
**caractérisé en ce que**
- les barrettes (13) d'au moins un premier plan de barrettes (12₁) et d'un second plan de barrettes (12₂) qui suit directement le premier se transforment les unes en les autres en étant réalisées d'un seul tenant.

2. Dispositif d'étranglement de l'écoulement selon la revendication 1, dans lequel les barrettes de deux plans de barrettes respectifs directement successifs s'étendent selon un angle d'au moins 45°, en particulier d'au moins 85°, les unes par rapport aux autres.

3. Dispositif d'étranglement de l'écoulement selon la revendication 1 ou 2, dans lequel les barrettes des deuxièmes plans de barrettes respectifs suivants sont parallèles et décalées transversalement.

4. Dispositif d'étranglement de l'écoulement selon l'une des revendications 1 à 3,
dans lequel les barrettes ont une largeur égale (B_{S}), et une largeur (B_{Z}) des intervalles inter-barrettes s'écarte de 10 % au maximum de la largeur des barrettes.

5. Dispositif d'étranglement de l'écoulement selon l'une des revendications 1 à 4,
dans lequel le corps d'étranglement est constitué de plusieurs d'éléments d'étranglement (15₁, 15₂, ...) réalisés d'un seul tenant et empilés dans la direction axiale, qui comprennent chacun au moins le premier plan de barrettes et le second plan de barrettes.

6. Dispositif d'étranglement de l'écoulement selon la revendication 5,
dans lequel les éléments d'étranglement empilés comprennent des moyens de liaison (16) par lesquels ils sont reliés les uns aux autres de manière détachable ou non détachable.

7. Dispositif d'étranglement de l'écoulement selon la revendication 6,
dans lequel lesdits moyens de liaison sont des moyens de liaison par enclenchement (17, 18) détachables.

8. Dispositif d'étranglement de l'écoulement selon l'une des revendications 1 à 7,
dans lequel une largeur (B_{S}) de la barrette respective (13) perpendiculairement à la direction axiale (AR) est plus petite qu'une hauteur de la barrette parallèlement à la direction axiale.

9. Dispositif d'étranglement de l'écoulement selon la revendication 8, dans lequel la hauteur de la barrette est deux à cinq fois plus importante que la largeur de la barrette.

10. Douche sanitaire, comportant
- un corps de raccordement de douche (6) qui comprend une zone d'entrée de douche (1) pourvue d'une entrée de douche (2),
- un corps principal de douche (7) qui comprend une zone de sortie de douche (3) pourvue d'une sortie de douche (4) et qui est relié au corps d'entrée de douche,
- un guide d'eau (5) de l'entrée de douche à la sortie de douche, et
- un dispositif (11) d'étranglement de l'écoulement selon l'une des revendications 1 à 9, disposé dans le corps de raccordement de douche dans le guide d'eau.
